# EUROPEAN PATENT APPLICATION

(11) **EP 4 679 287 A1**
(43) Date of publication of application: **14.01.2026**
(21) Application number: 24800258.6
(22) Date of filing: 03.05.2024
(51) Int. Cl.: G06F 16/332, G06F 16/338, G06F 16/34, G06F 16/33, G06F 40/205, G06N 5/04, G06N 3/04, G06N 3/08

(54) **METHOD FOR PROVIDING INTELLIGENT RESPONSE AGENT BASED ON ADVANCED INFERENCE AND ESTIMATION FUNCTION, AND SYSTEM THEREFOR**

(30) Priority: 04.05.2023 KR 20230058429; 25.01.2024 KR 20240011406
(71) Applicant: LG Management Development Institute Co., Ltd., Seoul 07336 (KR)
(72) Inventor: LEE, Moon Tae, Goyang-si, Gyeonggi-do 10595 (KR); LEE, Kyung Jae, Seoul 07372 (KR); PARK, Sung Hyun, Seoul 08725 (KR); HWANG, Da Sol, Seoul 07801 (KR); KIM, Gyeong Hun, Seoul 07628 (KR); KIM, Yi Reun, Seoul 07803 (KR); YUN, Hyeon Gu, Seongnam-si, Gyeonggi-do 13602 (KR); SHIN, Joong Bo, Seoul 07586 (KR); PARK, Yong Chul, Seoul 06374 (KR); JUN, Chang Wook, Hanam-si, Gyeonggi-do 12906 (KR); KIM, Eui Soon, Seoul 08083 (KR); CHOI, Jung Kyu, Anyang-si, Gyeonggi-do 14101 (KR); LEE, Jin Sik, Goyang-si, Gyeonggi-do 10415 (KR); LEE, Hwa Young, Seoul 04197 (KR); LEE, Hong Lak, Seoul 07789 (KR); BAE, Kyung Hoon, Seoul 06597 (KR)
(74) Representative: BCKIP Part mbB
(86) International application number: PCT/KR2024/005992
(87) International publication number: WO 2024/228577

(57) **Abstract**

A method and system for providing an intelligent response agent based on a sophisticated reasoning and speculation function according to an embodiment of the present disclosure can generate and provide response data for queries related to specialized documents using a deep-learning neural network that implements a stepwise process for a sophisticated reasoning and speculation function.

## Description

### [Technical Field]

The present disclosure relates to a method and system for providing an intelligent response agent based on a sophisticated reasoning and inference function. More specifically, the present disclosure relates to a method and system for generating and providing response data for queries related to a specialized document using a deep-learning neural network that implements a stepwise process for a sophisticated reasoning and inference function.

### [Background Art]

Research on deep learning related to question answering aims to provide accurate answers to user questions through an artificial intelligence model.

In general, question-answering deep learning systems of the related art are implemented as systems that construct semantic elements as patterns (rules) by parsing a predetermined query and extract responses from a database structures with the same language as Structured Query Language (SQL).

However, in processing various natural languages, the number of syntactic patterns that must be constructed increases exponentially, which causes a problem that the effectiveness of question-answering deep learning systems decreases.

Accordingly, in recent years, a Machine Reading Comprehension (MRC) model, which is a technology based on an artificial intelligence algorithm that analyzes queries by itself and finds optimized answers, is widely used.

Specifically, an MRC model is a system in which a computer reads and comprehends a presented text (sentences and/or documents for understanding a query) and identifies and presents an answer to the query.

However, in order to effectively utilize a question-answering deep learning system using an MRC model, a presented text must first exist, and if no text has been generated, it is difficult to provide a response through the MRC model

Meanwhile, MRC models of the related art have been trained for a long time through various previous models and benchmark datasets, but most training datasets are based on question-answering datasets that do not require deep document comprehension.

Accordingly, a deep learning-based question-answering process that generates responses to in-depth queries requiring sophisticated reasoning and inference remains largely undeveloped.

In other word, although previous studies significantly enhanced MRC answer capabilities, they have the limitation that it is difficult to handle more in-depth question answering beyond fact-based (factoid) QA.

For example, most query consist mainly of fact-checking questions such as "what", "when", "where", and "who", and MRC models can extract short answers from specific paragraphs related to these questions, but they have difficulty in providing answers to in-depth questions such as "how" or "why".

That is, according to the related art, for in-depth queries that require knowledge processing and reasoning innovations related to specialized documents containing deep technical information (e.g., scientific and technical papers), there is a problem that deep learning models have low answer accuracy and quality.

### [Disclosure]

### [Technical Problem]

According to an embodiment of the present disclosure, an objective of the present disclosure is to provide a method and system for generating and providing response data to queries related to a specialized document using a deep-learning neural network that implements a stepwise process for a sophisticated reasoning and inference function.

Further, according to an embodiment of the present disclosure, an objective of the present disclosure is to implement a method and system for providing generated response data and rationale information supporting the response data in a linked manner.

However, the objectives to be achieved by the present disclosure and embodiments of the present disclosure are not limited to the objectives described above and there may be other objectives.

### [Technical Solution]

A method of providing an intelligent response agent based on a sophisticated reasoning and inference function is a method in which a response agent application that is executed by at least one processor of a terminal provides an intelligent response agent based on a sophisticated reasoning and inference function, and the methods includes; acquiring query data specifying a user's question; determining a specialized document for the acquired query data; detecting an evidential paragraph including at least one passage associated with the query data in the determined specialized document; generating response data specifying an answer to the question on the basis of the detected evidential paragraph; and providing the generated response data.

In another aspect, the method of providing an intelligent response agent based on a sophisticated reasoning and inference function according to an embodiment of the present disclosure further includes: acquiring rationale data that is base data for generating the response data on the basis of the detected evidential paragraph; and generating the response data on the basis of the acquired rationale data.

In another aspect, the rationale data includes at least one data of main answer data including a direct answer to the query data, explanation sentence data including a detailed explanation for the direct answer, and auxiliary information data including background knowledge information related to the question and the answer.

In another aspect, the detecting of an evidential paragraph includes detecting the evidential paragraph on the basis of a prompt engineering algorithm.

In another aspect, the method of providing an intelligent response agent based on a sophisticated reasoning and inference function according to an embodiment of the present disclosure further includes: inputting the determined specialized document and the query data into a response agent model that executes a multi-step inference process; and generating the response data on the basis of the response agent model, wherein the multi-step inference process includes an associative selection process that detects the evidential paragraphs, a rationale generation process that acquires the rationale data, and a systematic composition process that generates the response data.

In another aspect, the generating of the response data on the basis of the response agent model includes executing the associative selection process and the rationale generation process by reflecting at least one previously stored query data and response data.

In another aspect, the providing of the generated response data includes matching and providing rationale information for the response data with the response data, and the rationale information includes at least two or more of the rationale data, the evidential paragraph data, the evidential paragraph identification information, the specialized document data, the specialized document identification information, and the query data.

In another aspect, the providing of the generated response data further includes: separating the response data into at least one sentence unit; detecting the rationale information for each of the separated sentences; and matching and providing the detected rationale information for each sentence with a sentence corresponding to each item of rational information.

In another aspect, the determining of a specialized document for the query data includes at least one of: determining a specialized document for the query data on the basis of at least one specialized document input by the user; determining a specialized document for the query data on the basis of a specialized document corresponding to at least one item of specialized document identification information input by the user; and detecting at least one specialized document having relevance at a preset level or higher to the query data on the basis of a predetermined deep-learning neural network, and determining a specialized document for the query data on the basis of the detected at least one specialized document.

In another aspect, a system for providing an intelligent response agent based on a sophisticated reasoning and inference function according to an embodiment of the present disclosure includes: at least one memory configured to store a response agent application; and at least one processor configured to provide an intelligent response agent based on a sophisticated reasoning and inference function by reading out the response agent application stored in the memory, wherein instructions of the response agent application include instructions for performing: acquiring query data specifying a user's question; determining a specialized document for the acquired query data; detecting an evidential paragraph including at least one passage associated with the query data in the determined specialized document; generating response data specifying an answer to the question on the basis of the detected evidential paragraph; and providing the generated response data.

### [Advantageous Effects]

As described above, the method and system for providing an intelligent response agent based on a sophisticated reasoning and speculation function according to an embodiment of the present disclosure generates and provides response data for queries related to specialized documents using a deep-learning neural network that implements a stepwise process for a sophisticated reasoning and speculation function, whereby it has the effect that it is possible to provide response data that is faithful for the questions, is grounded on facts (hallucination-controlled), and is clearly evidential for in-depth queries related to specialized documents, on the basis of a sophisticated reasoning (chain-of-thought reasoning) and inference (speculation) function that is implemented in a manner similar to human cognitive reasoning.

Further, the method and system for providing an intelligent response agent based on a sophisticated reasoning and speculation function according to an embodiment of the present disclosure can allow a user to intuitively and easily check objective evidence materials including the rationale for generating response data by providing the generated response data and the rationale information supporting the response data in association, whereby it has the effect that it can enhance the reliability and validity of the response data.

However, effects that can be obtained in the present disclosure are not limited to the effects stated above, and other effects not stated can be clearly understood from the following description.

### [Description of Drawings]

FIG. 1 is a conceptual diagram of an intelligent response agent system according to an example of the present disclosure.
FIG. 2 is an internal block diagram of a terminal according to an embodiment of the present disclosure.
FIGS. 3 and 4 are examples of diagrams for explaining a multi-step inference process of a response deep learning model according to an embodiment of the present disclosure.
FIG. 5 is a flowchart for explaining a method of providing an intelligent response agent based on a sophisticated reasoning and inference function according to an embodiment of the present disclosure.
FIG. 6 is a conceptual diagram for explaining the method of providing an intelligent response agent based on a sophisticated reasoning and inference function according to an embodiment of the present disclosure.
FIG. 7 is an example of a diagram for explaining a method of acquiring response data for predetermined query data on the basis of a response agent model according to an embodiment of the present disclosure.
FIGS. 8 to 10 are examples of diagrams for explaining a method of providing predetermined response data on the basis of an answer output interface according to an embodiment of the present disclosure.
FIG. 11 is an example of a diagram for explaining a method of determining a base document on the basis of rationale information according to an embodiment of the present disclosure.

### [Mode for Invention]

The present disclosure may be modified in various ways and may have various embodiments, so that specific embodiments are shown in the drawings and will be described in detail herein. The advantages and features of the present disclosure, and methods of achieving them will be clear by referring to the embodiments that will be describe hereafter in detail with reference to the drawings. However, the present disclosure is not limited to the disclosed embodiments and may be implemented in various ways. In the following embodiments, terms such as "first" and "second" are used to discriminate a component from another component without limiting the components. Further, singular forms are intended to include plural forms unless the context clearly indicates otherwise. Further, terms such as "include" or "have" mean that the features or components described herein exist without excluding the possibility that one or more other features or components are added. Further, components may be exaggerated or reduced in size for the convenience of description. For example, the sizes and thicknesses of the components shown the figures are selectively provided and the present disclosure is not necessarily limited thereto.

Hereinafter, embodiments of the present disclosure are described in detail with reference to the accompanying drawings, and in the following description of the accompanying drawings, like reference numerals are given to like components and repetitive description is omitted.

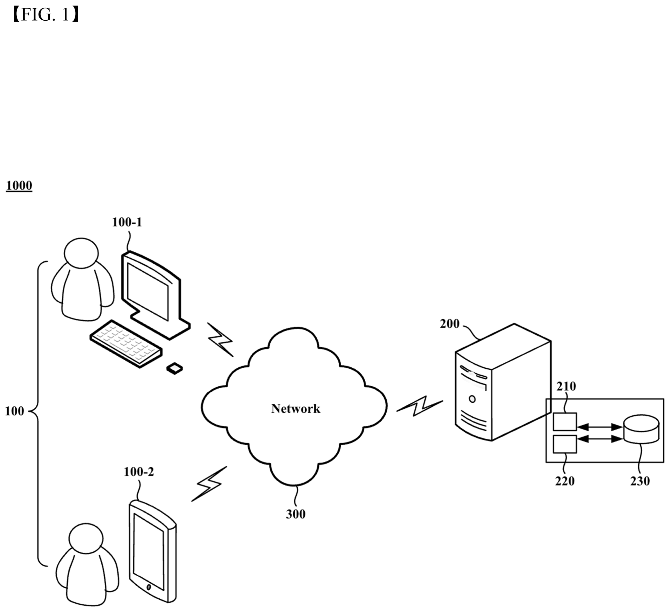

FIG. 1 is a conceptual diagram of an intelligent response agent system according to an example of the present disclosure.

Referring to FIG. 1, an intelligent response agent system 1000 according to an embodiment of the present disclosure can implement an intelligent response agent service that acquires and provides response data for queries related to a specialized document using a deep-learning neural network implementing a multi-step process for a sophisticated reasoning and inference function.

In an embodiment, the intelligent response agent system 1000 implementing an intelligent response agent service may include a terminal 100, a response agent providing server 200, and a network 300.

In this configuration, the terminal 100 and/or the response agent providing server 200 may be connected via the network 300.

Here, the network 300 according to an embodiment refers to a connection structure that enables information exchange between nodes such as the terminal 100 and/or the response agent providing server 200.

The network 300, for example, may include a 3rd Generation Partnership Project (3GPP) network, a Long Term Evolution (LTE) network, a World Interoperability for Microwave Access (WIMAX) network, the internet, a Local Area Network (LAN), a Wireless Local Area Network (Wireless LAN), a Wide Area Network (WAN), a Personal Area Network (PAN), a Bluetooth network, a satellite broadcasting network, an analog broadcasting network, and/or a Digital Multimedia Broadcasting (DMB) network, but is not limited thereto.

Hereinafter, the terminal 100 and the response agent providing server 200 that implement the intelligent response agent system 1000 are described in detail with reference to the accompanying drawings.

### - Terminal (100)

The terminal 100 according to an embodiment of the present disclosure may be a predetermined computing device in which a response agent application (hereinafter, an application) that provides the intelligent response agent service is installed.

In detail, from a hardware perspective, the terminal 100 may include a mobile-type computing device 100-1 and/or a desktop-type computing device 100-2 in which the application is installed.

Here, the mobile-type computing device 100-1 may be a mobile device in which the application is installed.

For example, the mobile type-computing device 100-1 may include a smart phone, a mobile phone, a digital broadcasting device, a personal digital assistant (PDA), a portable multimedia player (PMP), and/or a tablet PC.

Further, the desktop-type computing device 100-2 may be a wired or wireless communication-based device in which the application is installed.

For example, the desktop-type computing device 100-2 may include personal computers such as a fixed desktop PC, a laptop computer, and/or an ultrabook.

Depending on embodiments, the terminal 100 may further include a predetermined server computing device that provides an intelligent response agent service environment.

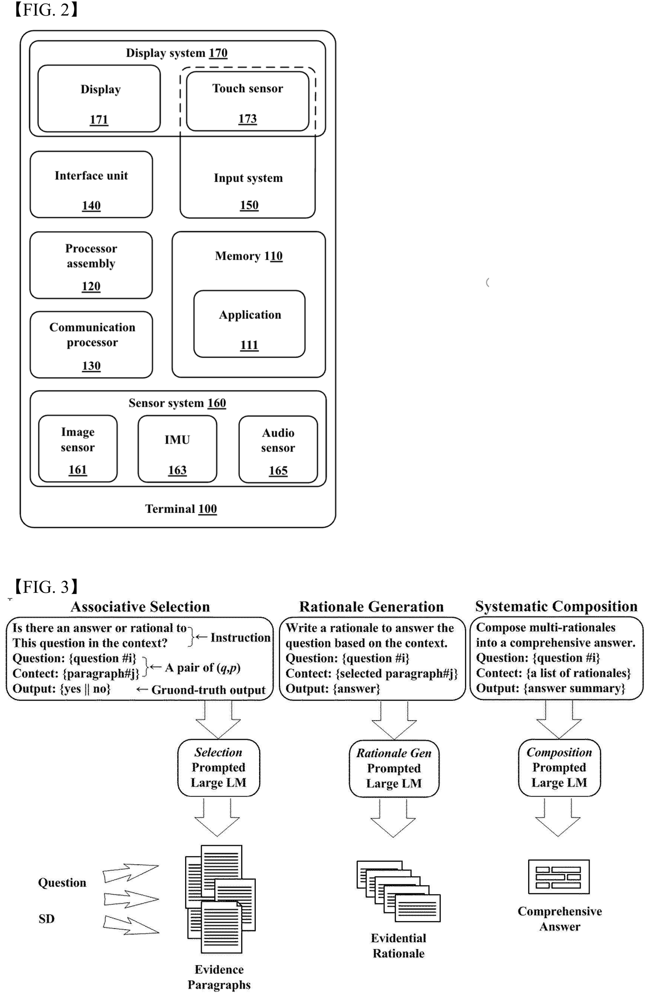

FIG. 2 is an internal block diagram of the terminal 100 according to an embodiment of the present disclosure.

Meanwhile, referring to FIG. 2, from a functional perspective, the terminal 100 may include a memory 110, a processor assembly 120, a communication processor 130, an interface unit 140, an input system 150, a sensor system 160, and a display system 170. In an embodiment, the terminal 100 may contain the aforementioned components within a housing.

In detail, the memory 110 can store an application.

In this configuration, the application 111 can store one or more of various application programs, data, and instructions for providing an intelligent response agent service environment.

That is, the memory 110 can store commands, data, etc. that can be used to generate an intelligent response agent service environment.

The memory 110 may include a program area and a data area.

Here, the program area according to an embodiment may be linked between an operating system (OS) that boots the terminal 100 and functional elements.

Further, the data area according to an embodiment can store data generated with use of the terminal 100.

Further, the memory 110 may include at least one or more non-transitory computer-readable storage media and transitory computer-readable media.

For example, the memory 110 may be various storage devices such as a ROM, an EPROM, a flash drive, and a hard drive, and may include a web storage that performs the storage function of the memory 110 on the internet.

The processor assembly 120 may include at least one or more processors, which can execute the commands of the application 111 stored in the memory 110, in order to perform various tasks for generating an intelligent response agent service environment.

In an embodiment, the processor assembly 120 can the overall operation of components through the application 111 of the memory 110 in order to provide an intelligent response agent service.

In detail, the processor assembly 120 may be a system-on-chip (SoC) suitable for the terminal 100 that includes a central processing unit (CPU) and/or a graphics processing unit (GPU).

Further, the processor assembly 120 can execute an operating system (OS) and/or application programs stored in the memory 110.

Further, the processor assembly 120 can control each component mounted in the terminal 100.

Further, the processor assembly 120 can communicate with components internally via a system bus and may include one or more predetermined bus structures including a local bus.

The processor assembly 120 may include at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and/or other electric units for performing functions.

The communication processor130 may include one or more devices for communication with external devices. The communication module 130 can perform communication via a wireless network.

In detail, the communication processor 130 can communicate with the terminal 100 that stores content sources for implementing an intelligent response agent service environment.

Further, the communication processor 130 can communicate with various user input components such as a controller that receives user input.

In an embodiment, the communication processor 130 can transmit and receive various data related to an intelligent response agent service to and from another terminal 100 and/or an external server.

The communication processor 130 can wirelessly transmit and receive data to and from at least one of a base station, an external terminal 100, and a certain server on a mobile communication network constructed by communication devices that can perform communication standards or methods for mobile communication (e.g., Long Term Evolution (LTE), Long Term Evolution-Advanced (LTE-A), 5G New Radio (NR), and Wi-Fi)), or a short-range communication method.

The sensor system 160 may include various sensors such as an image sensor 161, a position sensor (IMU) 163, an audio sensor 165, a distance sensor, a proximity sensor, and a contact sensor.

Here, the image sensor 161 can capture visual data (an image and/or a video, etc.) of the physical space around the terminal 100.

In detail, the image sensor 161 can capture visual data of a predetermined physical space through a camera disposed to face the outside of the terminal 100.

As an embodiment, the image sensor 161 can be disposed on the front and/or rear of the terminal 100 and capture visual data of the physical space in the disposition direction.

In an embodiment, the image sensor 161 can capture and acquire various visual data (for example, a specialized document image, etc.) related to an intelligent response agent service.

The image sensor 161 may include an image sensor device and a visual data processing module.

In detail, the image sensor 161 can process still images or videos that are obtained by an image sensor device (e.g., a CMOS or a CCD).

Further, the image sensor 161 can extract necessary information by processing still images or videos acquired through an image sensor device using a visual data processing module, and can transmit the extracted information to a processor.

The image sensor 161 may be a camera assembly including at least one or more cameras.

Here, the camera assembly may include a general camera that captures the visible light spectrum, and may further include a specialized camera such as an infrared camera and a stereo camera.

Further, the image sensor 161 described above, depending on embodiments, may be included and operated in the terminal 100 or may be included in an external device (e.g., an external server, etc.) and operated through linkage based on the communication processor 130 and/or the interface unit 140 described above.

The position sensor (IMU) 163 can detect at least one or more of movement and acceleration of the terminal 100. For example, the position sensor may be implemented by a combination of various position sensors such as an accelerometer, a gyroscope, and a magnetometer.

Further, the position sensor (IMU) 163 can recognize spatial information of the physical space around the terminal 100 by operating in linkage with a location communication processor 130, such as a GPS of the communication processor 130.

The audio sensor 165 can recognize sounds around the terminal 100.

In detail, the audio sensor 165 may include a microphone capable of detecting voice input from a user who uses the terminal 100.

In an embodiment, the audio sensor 165 can receive voice data necessary for an intelligent response agent service from a user.

The interface unit 140 can connect the terminal 100 to one or more other devices to enable communication.

In detail, the interface unit 140 may include a wired and/or wireless communication device that is compatible with one or more different communication protocols.

Through the interface unit 140, the terminal 100 can be connected to various input and output devices.

For example, the interface unit 140 can be connected to an audio output device, such as a headset port or a speaker, and can output audio.

Although an example in which the audio output device is connected via the interface unit 140 has been described, embodiments in which the device is installed inside the terminal 100 may also be included.

For example, the interface unit 140 may be connected to an input device such as a keyboard and/or a mouse and acquire user input.

The interface unit 140 may include at least one of a wired/wireless headset port, an external charger port, a wire/wireless data port, a memory card port, a port for connecting a device equipped with an identification module, an audio Input/Output (I/O) port, a video Input/Output (I/O) port, an earphone port, a power amplifier, an RF circuit, a transceiver, and other communication circuits.

The input system 150 can detect user input related to an intelligent response agent service (e.g., a gesture, a voice command, a button operation, or other types of input).

In detail, the input system 150 may include a predetermined button buttons, a touch sensor, the image sensor 161 for detecting user motion input, and/or the audio sensor 165 for detecting user voice input.

Further, the input system 150 can be connected to an external controller through the interface unit 140 and receive user input.

The display system 170 can output various items of information related to an intelligent response agent service in the form of graphical images.

As an embodiment, the display system 170 can display various user interfaces, images, and/or text for an intelligent response agent service.

Such a display may include at least one of a liquid crystal display (LCD), a thin film transistor-liquid crystal display (TFT LCD), an organic light-emitting diode (OLED), a flexible display, a 3D display, and/or an e-ink display, and is not limited thereto.

Further, the display system 170 may include a display 171 that outputs images and a touch sensor 173 that detects touch input by a user.

For example, the display 171 may be implemented as a touch screen by forming a layered structure with the touch sensor 173 or being integrally formed with the touch sensor 173.

The touch screen can function as a user input unit that provides an input interface between the terminal 100 and a user, and it can also provide an output interface between the terminal 100 and the user.

Meanwhile, the terminal 100 according to an embodiment of the present disclosure can perform deep learning related to an intelligent response agent service on the basis of a predetermined deep-learning neural network.

Here, the deep-learning neural network according to an embodiment may include OpenAI GPT, Instruct GPT, Bidirectional LSTM (Bi-LSTM), Long Short-Term Memory models (LSTM), Multi-Layer Perceptron (MLP), EfficientNet, ResNet, Autoregressive Integrated Moving Average (ARIMA), Vector Auto Regression (VAR), Recurrent Neural Networks (RNN), Gated Recurrent Unit (GRU), Generative Adversarial Networks (GAN), DualStyleGAN, StyleGAN, Graph Convolution Network (GCN), Convolutional Neural Network (CNN), Deep Plane Sweep Network (DPSNet), Attention Guided Network (AGN), Regions with CNN features (R-CNN), Fast R-CNN, Faster R-CNN, Mask R-CNN, and/or U-Net network, and is not limited thereto.

In detail, in an embodiment, the terminal 100 can perform deep learning necessary for an intelligent response agent service in linkage with at least one or more deep-learning neural networks capable of implementing a response agent model according to an embodiment of the present disclosure.

In this embodiment, the response agent model can perform deep learning that receives, as input, at least one specialized document data (e.g., a paper and/or a report) and query data, and outputs at least one response data based on the input specialized document data and query data.

On the other hand, the terminal 100 may further perform at least some of the functional operations that are performed by the response agent providing server 200 to be described below.

### - Response Agent Providing Server (200)

Meanwhile, the response agent providing server 200 according to an embodiment of the present disclosure can perform a series of processes for providing an intelligent response agent service.

In detail, in an embodiment, the response agent providing server 200 can provide an intelligent response agent service by exchanging data necessary for driving a response agent providing process in an external device such as the terminal 100 with the external device.

In more detail, in an embodiment, the response agent providing server 200 can provide an environment in which the application 111 can operate in an external device (in an embodiment, a mobile-type computing device 100-1 and/or a desktop-type computing device 100-2, etc.).

To this end, the response agent providing server 200 may include application programs, data, and/or instructions for operating the application 111, and can transmit and receive various data based on them to and from the external device.

Further, in an embodiment, the response agent providing server 200 may acquire query data.

Here, the query data according to an embodiment may refer to data specifying a user's question related to a predetermined specialized document (e.g., a paper and/or a report, etc.).

Further, in an embodiment, the response agent providing server 200 can determine a specialized document for the acquired query data.

That is, in an embodiment, the response agent providing server 200 can determine at least one specialized document that is used when response data for the acquired query data is generated.

Further, in an embodiment, the response agent providing server 200 can input the determined specialized document and the query data into a response agent model according to an embodiment of the present disclosure.

Further, in an embodiment, the response agent providing server 200 can acquire response data for the input query data in linkage with the response agent model that has received the specialized document and query data as input.

Here, the response data according to an embodiment may refer to data specifying an answer to a user's question related to a predetermined specialized document (e.g., a paper and/or a report, etc.).

Further, in an embodiment, the response agent providing server 200 can provide the acquired response data in accordance with a predetermined method (e.g., display output, etc.).

Further, in an embodiment, the response agent providing server 200 can perform deep learning necessary for an intelligent response agent service on the basis of a predetermined deep-learning neural network.

In detail, in an embodiment, the response agent providing server 200 can perform deep learning necessary for an intelligent response agent service in linkage with at least one or more deep-learning neural networks capable of implementing the response agent model according to an embodiment of the present disclosure.

In more detail, in an embodiment, the response agent providing server 200 can read out a predetermined deep-learning neural network driving program, which is constructed to perform the deep learning, from the memory module 230.

Then, the response agent providing server 200 can perform deep learning necessary for an intelligent response agent service in accordance with the read-out predetermined deep-learning neural network system.

Here, the deep-learning neural network according to an embodiment may include OpenAI GPT, Instruct GPT, Bidirectional LSTM (Bi-LSTM), Long Short-Term Memory models (LSTM), Multi-Layer Perceptron (MLP), EfficientNet, ResNet, Autoregressive Integrated Moving Average (ARIMA), Vector Auto Regression (VAR), Recurrent Neural Networks (RNN), Gated Recurrent Unit (GRU), Generative Adversarial Networks (GAN), DualStyleGAN, StyleGAN, Graph Convolution Network (GCN), Convolutional Neural Network (CNN), Deep Plane Sweep Network (DPSNet), Attention Guided Network (AGN), Regions with CNN features (R-CNN), Fast R-CNN, Faster R-CNN, Mask R-CNN, and/or U-Net network, and is not limited thereto.

In this case, according to an embodiment, the deep-learning neural network may be directly included in the response agent providing server 200 or may be implemented as a separate device and/or server from the response agent providing server 200.

In the following description, the deep-learning neural network is described as being included in the response agent providing server 200, but this is not limited thereto.

Further, in an embodiment, the response agent providing server 200 can store and manage various application programs, instructions, and/or data for implementing an intelligent response agent service.

As an embodiment, the response agent providing server 200 can store and manage at least one or more query data, specialized document data, response data, rationale information, data processing algorithms, deep learning algorithms, and/or user interfaces.

However, the functional operations that the response agent providing server 200 can perform in an embodiment of the present disclosure are not limited to those described above, and it can perform additional functional operations.

Meanwhile, further referring to FIG. 1, in an embodiment, the response agent providing server 200 described above may be implemented as a predetermined computing device including at least one or more processor modules 210 for data processing, at least one or more communication modules 220 for data exchange with an external device, and at least one or more memory modules 230 that stores various application programs, data, and/or instructions for providing an intelligent response agent service.

Here, the memory module 230 can store any one or more of an operating system (OS), various application programs, data, and instructions for providing an intelligent response agent service.

Further, the memory module 230 may include a program area and a data area.

In this case, the program area according to an embodiment may be linked between an operating system (OS) that boots a server and functional elements.

Further, the data area according to an embodiment can store data generated with use of a server.

Further, the memory module 230 may be various storage devices such as a ROM, a RAM, an EPROM, a flash drive, and a hard drive, and may be a web storage that performs the storage function of the memory module 230 on the internet.

Further, the memory module 230 may be a recording medium that can be detachably coupled to a server.

Meanwhile, the processor module 210 can control the overall operation of each of the units described above to implement an intelligent response agent service.

In detail, the processor module 210 may be a system-on-chip (SoC) suitable for a server that includes a central processing unit (CPU) and/or a graphics processing unit (GPU).

Further, the processor module 210 can execute an operating system (OS) and/or application programs stored in the memory module 230.

Further, the processor module 210 can control the components mounted on in a server.

The processor module 210 can perform communication internally with the components using a system bus and may include one or more predetermined bus structures including a local bus.

The processor module 210 may be implemented using at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and/or other electric units for performing functions.

It was described above that the response agent providing server 200 according to an embodiment of the present disclosure performs the functional operations described above, but, depending on embodiments, an external device (e.g., the terminal 100, etc.) may perform at least some of the functional operations that the response agent providing server 200 performs, or the response agent providing server 200 may further perform at least some of the functional operations that the external device performs, that is, various embodiments may be possible.

### - Response Agent Model (Question and Answer Language Model (QALM))

A response agent model (RAM) according to an embodiment of the present disclosure may be a deep learning model that receives, as input, at least one specialized document data (e.g., a paper and/or a report) and query data, and outputs at least one response data based on the input specialized document data and query data.

In an embodiment, the response agent model (RAM) can interpret input query more clearly and, based on this, provide a more optimized and high-quality response data by performing deep learning that implements a stepwise process (in an embodiment, a multi-step reasoning process) for a sophisticated reasoning and inference function when a specific specialized document and a query are input.

In this case, the response agent model (RAM) in an embodiment may be a deep learning model (e.g., a large language model (LLM)) pre-trained on the basis of a training dataset including a plurality of specialized documents to perform the functional operations described above.

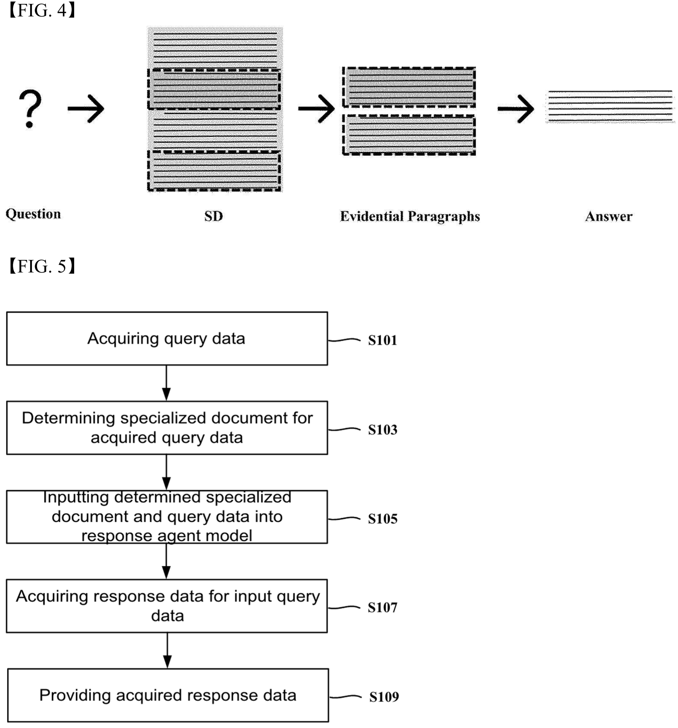

FIGS. 3 and 4 are examples of diagrams for explaining a multi-step inference process of a response deep learning model according to an embodiment of the present disclosure.

In detail, in an embodiment, the response agent model (RAM) can generate response data for predetermined query data on the basis of a multi-step inference process according to an embodiment of the present disclosure.

In this case, the multi-step inference process according to an embodiment may refer to a structured process that generates response data based on predetermined specialized document data and query data using deep learning.

The multi-step inference process may include an associative selection process, a rationale generation process, and a systematic composition process.

In more detail, in an embodiment, the response agent model (RAM) 1) can determine a paragraph within a specialized document associated with query data (hereinafter, evidential paragraph) (Associative Selection Process).

In detail, the response agent model (RAM) can extract at least one or more evidential paragraphs that are paragraphs including an answer and/or a rationale for query data from K (K ≥ 1) paragraphs included in a specialized document.

In this case, in an embodiment, the response agent model (RAM) may execute the above-described associative selection process by reflecting at least one or more previously stored existing query data and response data (hereinafter, existing query-response data).

Accordingly, the response deep learning model can generate subsequent response data on the basis of more extensive rationale data compared to the method that extracts short answers for query data in the related art.

In this case, in an embodiment, the response agent model (RAM) can perform the aforementioned associative selection process on the basis of a prompt engineering algorithm.

For reference, prompt engineering may refer to a process of creating and optimizing prompts to obtain desired results from a deep learning model.

Here, the prompt may refer to structured text that is inputted to a deep learning model to generate output.

Such prompts can guide a deep learning model to search for specific content among data, which a deep learning model has learned, so that it can output results that meet an objective.

By way of example, the components of a prompt may include an "instruction" that specifies the task or directive that a deep learning model is to perform, a "context" that specifies external information or additional context that enables adjustment of a deep learning model, "input data" that specifies the input or question for which an answer is sought, and/or "output data" that specifies the type or format of the output, etc.

That is, in an embodiment, the response agent model (RAM) can generate a structured prompt (hereinafter, a specialized document query prompt) according to a predetermined specialized document and query data on the basis of a prompt engineering algorithm, and can perform an associative selection process of extracting at least one evidential paragraph within the corresponding specialized document on the basis of the generated specialized document query prompt.

Therefore, the response deep learning model can extract at least one evidential paragraph on the basis of a clearer interpretation of the query data, such as more accurately understanding the question within the query data and the premises contained therein.

In this manner, the response deep learning model can directly enhance the quality of subsequently generated response data as well by significantly improving interpretation performance on query data.

Further, in an embodiment, the response agent model (RAM) 2) can acquire rationale data for the query data on the basis of the determined evidential paragraph (Rationale Generation Process).

Here, the rationale data according to an embodiment may refer to data serving as the basis for generation of response data for query data.

That is, in an embodiment, the rationale data may be a set of various data that is utilized when response data is generated.

In detail, in an embodiment, the response agent model (RAM), on the basis of the at least evidential paragraph, can detect main answer data that is data including a direct answer to query data, explanation sentence data that is data describing the direct answer in detail, and/or auxiliary information data that is data including related background knowledge.

Further, the response agent model (RAM) can acquire rationale data as described above on the basis of the detected data.

In this case, depending on embodiments, the response agent model (RAM) may execute the above-described rationale generation selection process by reflecting at least one or more previously stored existing query-response data.

Further, in an embodiment, the response agent model (RAM) 3) can generate response data on the basis of the acquired rationale data (Systematic Composition Process).

In detail, in an embodiment, the response agent model (RAM) can generate response data by performing data processing based on the acquired rationale data.

As an embodiment, the response agent model (RAM) can generate response data by performing predetermined data processing (e.g., removing redundant text) that enhances the conciseness and readability of the answer based on the rationale data.

As described above, in an embodiment, the response deep learning model can extract a rationale passage, which enables answering to query data, from a specialized document, generate evidential rationale on the basis of the contents of the extracted rationale passage, and provide response data providing a more in-depth answer on the basis of the generated evidential rationale.

That is, in an embodiment, the response deep learning model can be implemented as a language model specialized for specialized documents that removes issues such as hallucination and vague answers that are limitations of existing general-purpose language models (e.g., OpenAI GPT) in performing an in-depth question-answering task based on specialized documents.

Accordingly, the specialized document sharing platform providing system according to an embodiment of the present disclosure can provide response data that is faithful for the questions, is grounded on facts (hallucination-controlled), and is clearly evidential for in-depth queries related to specialized documents, on the basis of a sophisticated reasoning (chain-of-thought reasoning) and inference (speculation) function that is implemented in a manner similar to human cognitive reasoning.

### - Method of Providing Response Agent

Hereinafter, a method in which an application 111 that is executed by at least one or more processors of a terminal 100 according to an embodiment of the present disclosure generates and provides response data for specialized document-related queries using a deep-learning neural network implementing a stepwise process for a sophisticated reasoning and inference function (i.e., a method of implementing an intelligent response agent service) is described in detail with reference to the accompanying drawings.

In an embodiment of the present disclosure, at least one or more processors of the terminal 100 can execute at least one or more application 111 stored in at least one or more memories 110 or can operate the at least one or more applications 111 in a background state.

In the following embodiment, for brevity, the performance of a method of providing an intelligent response agent based on a sophisticated reasoning and inference function by at least one or more processors of the terminal 100 by operating to execute the instructions of the application 111 is referred to as being performed by the application 111.

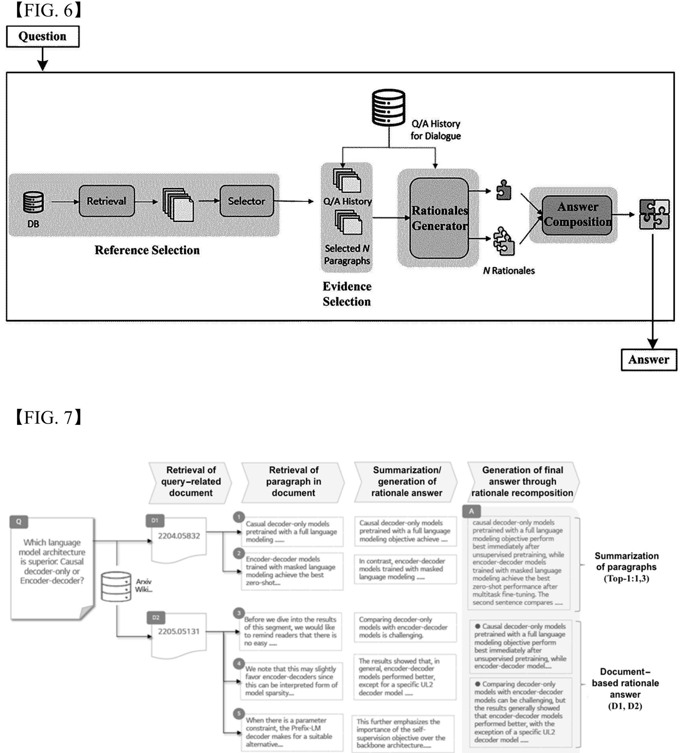

FIG. 5 is a flowchart for explaining a method of providing an intelligent response agent based on a sophisticated reasoning and inference function according to an embodiment of the present disclosure and FIG. 6 is a conceptual diagram for explaining the method of providing an intelligent response agent based on a sophisticated reasoning and inference function according to an embodiment of the present disclosure.

Referring to FIGS. 5 and 6, in an embodiment, the application 111 that is executed by at least one or more processors of a terminal 100 or operate in a background state can acquire query data (S101).

Here, the query data according to an embodiment may refer to data specifying a user's question related to a predetermined specialized document (e.g., a paper and/or a report, etc.).

By way of example, the query data may be "Please analyze rationale materials that can support the first content of the first paper" or "Please describe the expected result and anticipated effect when the first configuration of the first paper is combined with a second configuration not disclosed in the first paper".

In an embodiment, the application 111 can provide a user interface (hereinafter, a query input interface) capable of inputting predetermined query data on the basis of an intelligent response agent service platform.

Further, the application 111 can acquire at least one or more query data as described above on the basis of user input based on the provided query input interface.

Further, in an embodiment, the application 111 can determine a specialized document for the acquired query data (S103).

That is, in an embodiment, the application 111 can determine at least one specialized document that is used when response data for the acquired query data is generated.

In other words, the application 111 can determine at least one specialized document (hereinafter, a base document) to be input into the response agent model (RAM) according to an embodiment of the present disclosure in order to generate response data for the query data.

In detail, in an embodiment, the application 111 can determine 1) at least one specialized document directly uploaded by a user on the intelligent response agent service platform as a base document.

As another embodiment, the application 111 can determine 2) at least one specialized document detected on the basis of specialized document identification information (for example, a paper number and/or a paper title) input by a user, as a base document on the intelligent response agent service platform.

In detail, the application 111 can determine a base document by detecting, from the memory 110 and/or an external database, a specialized document corresponding to at least one item of specialized document identification information acquired in accordance with user input.

As another embodiment, the application 111 can determine 3) at least one specialized document, detected by performing deep learning based on the query data input on the intelligent response agent service platform, as a base document.

In detail, the application 111 can determine the aforementioned base document in linkage with a deep learning model (hereinafter, a query-related document detection model) that takes predetermined query data as input and outputs at least one specialized document (hereinafter, a related document) having relevance at a predetermined level or higher to the input query data.

That is, the application 111 can input the query data input on the intelligent response agent service platform into the query-related document detection model, and can acquire at least one related document corresponding to the query data from the query-related document detection model that has received the query data.

Further, the application 111 can determine a base document on the basis of the at least one acquired related document.

In this case, according to an embodiment, the query-related document detection model may be included the response agent model (RAM), and may be pre-trained on the basis of a training data set (i.e., a training data set including a plurality of specialized documents) used during the training of the response agent model (RAM).

In the above description, embodiments were separately described for effective description, but, depending on embodiments, at least some of the aforementioned embodiments may operate in an integrated manner, and various other embodiments are also possible.

In detail, in an embodiment, the application 111 1) can determine a base document based on a user-input document in accordance with user settings or 2) can determine a base document on the basis of a user-input document and a related document (i.e., a specialized document automatically detected through the deep learning model).

In other words, the application 111, depending on user's choice, can determine a base document on the basis of at least one specialized document directly input by the user (i.e., a user-input document), or can determine a base document on the basis of all of at least one user-input document directly input by the user and at least one specialized document (i.e., related document) automatically detected through the deep learning model.

In this manner, the application 111 can selectively determine a specialized document to be used when generating a response to a user's query in accordance with the user's needs.

Accordingly, the application 111 can implement a customized response data providing process that generates an answer to a corresponding query on the basis of the information in a data area desired by a user in accordance with the user's needs that depend on situations, such as when a user wants to obtain an answer on the basis of only the specialized documents that the user targets, or when a user wants to obtain an answer additionally using various other specialized documents related to a query in addition to specialized documents that the user they already knows.

Further, in an embodiment, the application 111 can input the determined specialized document and query data into the response agent model (RAM) (S105).

That is, in an embodiment, the application 111 can input the determined base document as described above and the acquired query data into the response agent model (RAM) according to an embodiment of the present disclosure.

Here, in other words, the response agent model (RAM) according to an embodiment of the present disclosure may be a deep learning model that receives, as input, predetermined specialized document data and query data, and outputs at least one response data based on the input specialized document data and query data.

In an embodiment, the response agent model (RAM) can interpret input query more clearly and, on the basis of this, provide a more optimized and high-quality response data by performing deep learning that implements a stepwise process (in an embodiment, a multi-step reasoning process) for a sophisticated reasoning and inference function when a specific specialized document and a query are input.

Further, in an embodiment, the application 111 can acquire response data for the input query data. (S107).

Here, the response data according to an embodiment may refer to data specifying an answer to a user's question related to a predetermined specialized document (e.g., a paper and/or a report, etc.).

That is, the response data may be data that provides an answer to predetermined query data.

FIG. 7 is an example of a diagram for explaining a method of acquiring response data for predetermined query data on the basis of a response agent model (RAM) according to an embodiment of the present disclosure.

In detail, referring to FIG. 7, in an embodiment, the application 111 can acquire response data for the input query data in linkage with the response agent model (RAM) that has received the base document and query data.

In more detail, referring further to FIGS. 3 and 4, in an embodiment, the response agent model (RAM) that has received the base document and query data can generate response data for the input query data in accordance with a multi-step inference process according to an embodiment of the present disclosure.

Here, in other words, the multi-step inference process according to an embodiment may refer to a structured process that generates response data based on predetermined specialized document data and query data using deep learning.

In an embodiment, the multi-step inference process may include an associative selection process that determines a paragraph within a specialized document associated with query data (i.e., an evidential paragraph), a rationale generation process that acquires rationale data for query data on the basis of the determined evidential paragraph, and a systematic composition process that generates response data on the basis of the acquired rationale data.

Further, in an embodiment, the response agent model (RAM) that has generated response data according to the multi-step inference process can provide the generated response data to the application 111.

Accordingly, in an embodiment, the application 111 can acquire response data for the input query data in linkage with the response agent model (RAM).

In this way, in an embodiment, the application 111 can acquire response data for corresponding query data on the basis of a response agent model (RAM) that performs a sophisticated reasoning and inference process that extracts a rationale passage, which enables answering to query data, from a specialized document, generates evidential rationale on the basis of the contents of the extracted rationale passage, and generates a more in-depth answer on the basis of the generated evidential rationale.

Accordingly, the application 111 can improve efficiency by resolving a process of search - rank - select - extract - edit, which is the existing question-answering paradigm, into a single process of generation, and at the same time can provide a more detailed and optimized high-quality answer according to the premise of clearly interpreting the intent of a question using objective data, rather than providing a vague answer.

Further, in an embodiment, the application 111 can provide the acquired response data (S109).

In detail, in an embodiment, the application 111 can provide at least one response data acquired as described above on the basis of at least one query data.

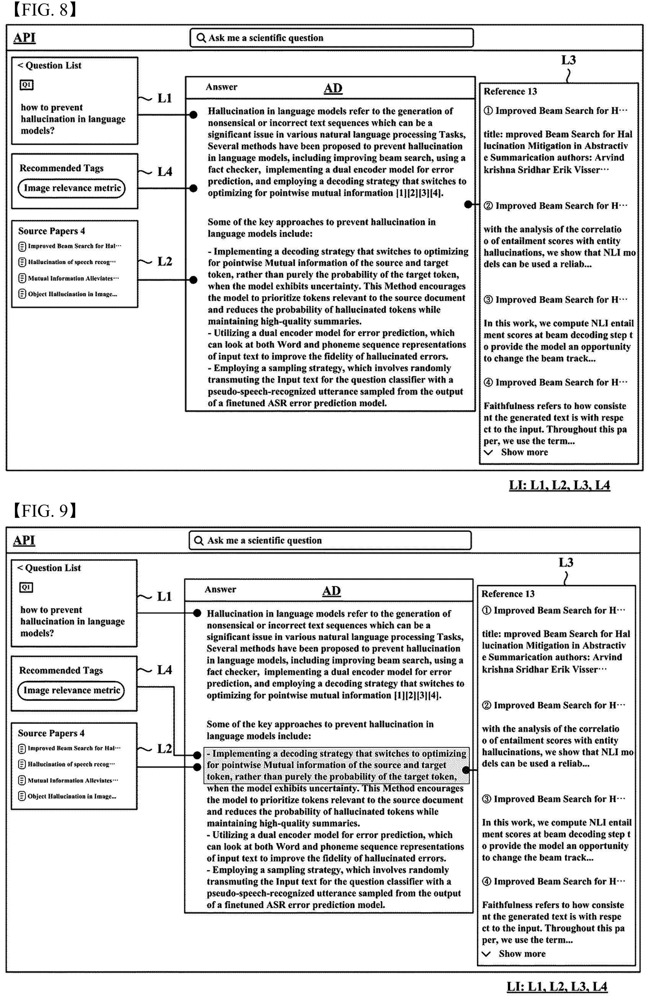

FIGS. 8 to 10 are examples of diagrams for explaining a method of providing predetermined response data on the basis of an answer output interface according to an embodiment of the present disclosure.

In more detail, referring to FIG. 8, in an embodiment, the application 111 can provide an answer output interface (API) on the basis of an intelligent response agent service platform.

Here, the answer output interface (API) according to an embodiment may refer to a user interface that visualizes and displays predetermined response data (AD) and various related data and information in accordance with a predetermined manner.

Further, in an embodiment, the application 111 can display and provide the generated response data (AD) on the basis of the provided answer output interface (API).

In this case, in an embodiment, the application 111 can match at least one item of rationale information corresponding to each provided response data (AD) to corresponding response data (AD) and display it in association.

Here, the rationale information according to an embodiment may refer to data and/or information used as rationale materials when generating predetermined response data (AD).

In an embodiment, such rationale information may include, corresponding to the predetermined response data (AD), specialized document data specialized document identification information (e.g., a paper number and/or a paper title), evidential paragraph data, evidential paragraph identification information (e.g., an evidential paragraph identification number/identification code of a preset format), and/or rationale data.

Further, in an embodiment, the rationale information may further include query data corresponding to the predetermined response data (AD).

In detail, in an embodiment, the application 111 can detect at least one item of rationale information corresponding to each response data (AD).

As an embodiment, the application 111 can detect at least one specialized document data related to the generation of each response data (AD), specialized document identification information for the specialized document data, evidential paragraph data, evidential paragraph identification information for the evidential paragraph data, and/or rationale data.

Further, in an embodiment, the application 111 can match the detected rationale information to each response data (AD) and display it in association through a response output interface (API) in accordance with a predetermined manner (e.g., a list, an image, and/or text).

In the following description, the explanation is based on an embodiment in which rationale information corresponding to each response data (AD) is provided in a list form, but this is merely an example and is not limited thereto.

In an embodiment, the application 111 may further include a list interface (LI) containing at least one item of rationale information for each response data (AD) in the response output interface (API).

Further, when displaying each response data (AD) through the response output interface (API), the application 111 can match and further display the list interface (LI) with each corresponding response data (AD).

In this way, in an embodiment, the application 111 can match various related information, such as what rationale materials were used to derive each response data (AD), their contents, and their locations, to corresponding response data (AD) and display them together.

Accordingly, the application 111 can clearly and intuitively present objective evidence materials demonstrating on what rationale each response data (AD) was generated, whereby it is possible to robustly enhance the reliability and validity of the provided response data (AD).

In this case, according to an embodiment, the application 111 can generate separate lists categorized by the attributes of each item of rationale information.

Further, the application 111 can match and provide each generated list with response data (AD) corresponding to each item of rationale information on the basis of the aforementioned list interface (LI).

As an embodiment, the application 111 can generate a query data list (L1), a document data list (L2), an evidential paragraph data list (L3), and/or a rationale data list (L4), categorized by the attributes of each item of rationale information.

Further, the application 111 can match each generated list to the response data (AD) corresponding to each items of rationale information and display them in association through the response output interface (API).

In this way, the application 111 can provide the materials used as the rationale for generating response data (AD) in a more refined manner by categorizing them in accordance with their attributes, whereby it is possible to further enhance readability and comprehensibility.

Meanwhile, referring to FIG. 9, according to an embodiment, the application 111 can display rationale information matched with each sentence (hereinafter, answer sentence) within each response data (AD) in association.

In detail, in an embodiment, the application 111 can divide each response data (AD) into at least one answer sentence unit.

Further, the application 111 can detect at least one item of rationale information used in generating each separated answer sentence.

Further, in an embodiment, the application 111 can match the detected rationale information to each corresponding answer sentence and display it in association through the answer output interface (API).

For example, when first response data (AD) consists of first to fifth answer sentences, the application 111 can detect first rationale information that is at least one item of rationale information used in generating the first answer sentence, second rationale that is at least one item of rationale information used in generating the second answer sentence, ..., and fifth rationale information that is at least one item of rationale information used in generating the fifth answer sentence.

Further, the application 111 can match the detected first rationale information to the corresponding first answer sentence, the second rationale information to the corresponding second answer sentence, ..., and the fifth rationale information to the corresponding fifth answer sentence, and display them through the answer output interface (API).

In this way, the application 111 can match and display the materials that serve as the rationale for each answer at the sentence level, which is more granular than the response data (AD) level, whereby it is possible to more thoroughly check and recognize the evidential rationales for the response data (AD).

Meanwhile, according to an embodiment, the application 111 can display in association the rationale information matched to each response data (AD) and/or each answer sentence when a preset display condition is satisfied.

For example, the preset display condition may include 1> a condition in which response data (AD) and/or an answer sentence is positioned at the top compared to other response data (AD) and/or other answer sentences, 2> a condition in which response data (AD) and/or an answer sentence is positioned in a predetermined central area within a display region, or 3> a condition in which response data (AD) and/or an answer sentence is positioned in a user selection region (e.g., a mouse-over region, etc.).

In detail, in an embodiment, the application 111 can select any one of the display conditions set in advance in accordance with user input, as described above.

Further, the application 111 can determine whether a display condition of response data (AD) and/or an answer sentence is satisfied on the basis of the selected display condition (hereinafter, an applied display condition).

Further, the application 111 can perform the rationale information association display process described above on the basis of the response data (AD) and/or answer sentences that satisfy the applied display condition.

That is, in an embodiment, the application 111 can determine the real-time attention status of response data (AD) and/or answer sentences changing in accordance with user input (e.g., mouse scroll, etc.), dynamically select and extract related rationale information, display it in association.

Accordingly, the application 111 can implement interactive visualization through interaction with the user who checks the response data (AD), and accordingly, the user can more easily and intuitively recognize the response data (AD) and related rationale information.

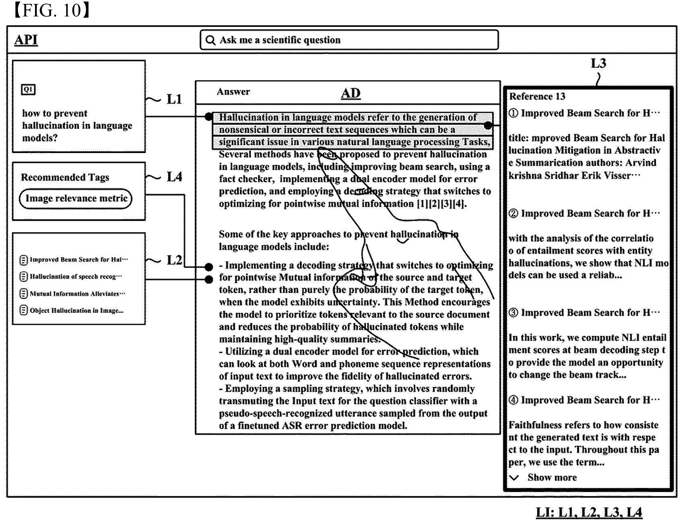

Meanwhile, referring to FIG. 10, in an embodiment, the application 111 can highlight, in a predetermined manner, the rationale information matched with each response data (AD) and/or each answer sentence when a preset highlighting condition is satisfied.

For example, the preset display condition may include 1> a condition in which response data (AD) and/or an answer sentence is positioned at the top compared to other response data (AD) and/or other answer sentences, 2> a condition in which response data (AD) and/or an answer sentence is positioned in a predetermined central area within a display region, or 3> a condition in which response data (AD) and/or an answer sentence is positioned in a user selection region (e.g., a mouse-over region, etc.).

In detail, in an embodiment, the application 111 can select any one of the display conditions set in advance in accordance with user input, as described above.

Further, the application 111 can determine whether a display condition of response data (AD) and/or an answer sentence is satisfied on the basis of the selected display condition (hereinafter, an applied display condition).

Further, the application 111 can highlight, in a predetermined manner, the response data (AD) and/or answer sentences that satisfy the applied display condition, along with corresponding rationale information.

As an embodiment, the application 111 can perform highlighting that emphasizes the response data (AD) and/or answer sentences that satisfy the applied display condition, along with the corresponding rationale information, using bounding boxes.

Accordingly, the application 111 can further enhance readability for users in the interactive visualization process based on the response data (AD).

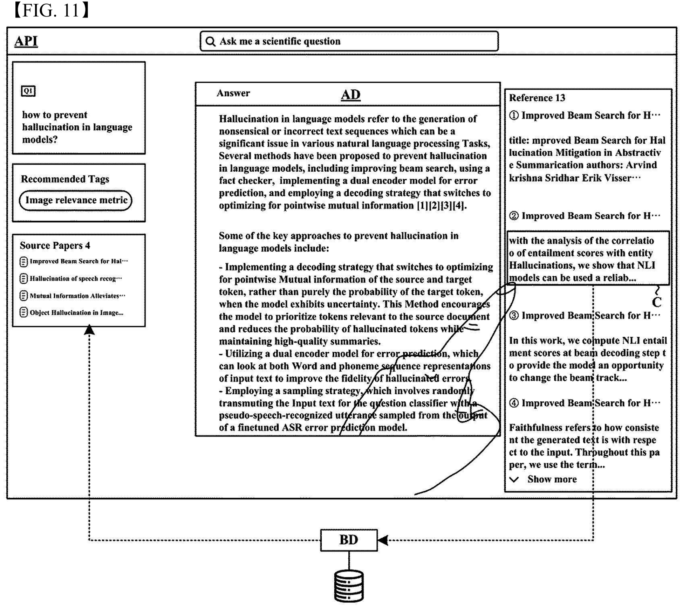

FIG. 11 is an example of a diagram for explaining a method of determining a base document on the basis of rationale information according to an embodiment of the present disclosure.

Meanwhile, referring to FIG. 11, depending on embodiments, the application 111 can set at least a portion of the rationale information provided through the answer output interface (API) as a base document (BD) in accordance with user input.

In detail, in an embodiment, the application 111 can provide a user interface (hereinafter, a base document (BD) designation interface) that allows selecting at least a portion of the rationale information displayed through the answer output interface (API).

Further, in an embodiment, the application 111 can determine (or update) the base document (BD) on the basis of the rationale information (C: hereinafter, base rationale information) selected in accordance with user input based on the provided base document (BD) designation interface.

As an embodiment, the application 111 can determine a base document (BD) using specialized document data and/or evidential paragraph data selected in accordance with user input based on the base document (BD) designation interface as the base rationale information (C).

In this case, in an embodiment, the application 111 can add the base rationale information (C) to an existing base document (BD) in accordance with to user input.

As another embodiment, the application 111 can replace the existing base document (BD) using the base rationale information (C) in accordance with user input.

Further, in an embodiment, the application 111 can execute the processes described in or after step S105 on the basis of the base document (BD) updated as described above.

Therefore, the application 111 effectively supports newly emerging user needs by providing answers, such as when a user wants to obtain a new answer by targeting at least a portion of a specialized document detected through artificial intelligence in addition to specialized documents that the user already knows, or when a user wants to obtain a new answer by focusing more on paragraphs within a specific specialized document, whereby it is possible to expand the paradigm of an intelligent response agent service and improve the usability as well.

In this case, according to an embodiment, the application 111 can acquire new query data in accordance with user input when updating the base document (BD).

Further, the application 111 can update existing query data on the basis of the acquired new query data.

For example, the application 111 can add the new query data to the existing query data in accordance with user input.

As another embodiment, the application 111 can replace the existing query data using the new query data in accordance with user input.

Further, in an embodiment, the application 111 can execute the processes described in or after step S 105 on the basis of the updated query data.

In this way, the application 111 can enhance convenience by supporting a user such that the user can easily formulate additional queries with a high degree of freedom even after receiving an answer.

As described above, the method and system for providing an intelligent response agent based on a sophisticated reasoning and speculation function according to an embodiment of the present disclosure generates and provides response data (AD) for queries related to specialized documents using a deep-learning neural network that implements a stepwise process for a sophisticated reasoning and speculation function, whereby it has the effect that it is possible to provide response data (AD) that is faithful for the questions, is grounded on facts (hallucination-controlled), and is clearly evidential for in-depth queries related to specialized documents, on the basis of a sophisticated reasoning (chain-of-thought reasoning) and inference (speculation) function that is implemented in a manner similar to human cognitive reasoning.

Further, the method and system for providing an intelligent response agent based on a sophisticated reasoning and speculation function according to an embodiment of the present disclosure can allow a user to intuitively and easily check objective evidence materials including the rationale for generating response data (AD) by providing the generated response data (AD) and the rationale information supporting the response data in association, whereby it has the effect that it can enhance the reliability and validity of the response data (AD).

Meanwhile, embodiments of the present disclosure described above may be implemented in the type of program instructions that can be executed through various computer components, and may be recorded on a computer-readable recording medium. The computer-readable recording medium may include program instructions, data files, and data structures individually or in combinations thereof. The program instructions that are recorded on a computer-readable recording medium may be those specifically designed and configured for the present disclosure or may be those available and known to those engaged in computer software in the art. The computer-readable recording medium includes magnetic media such as hard disks, floppy disks, and magnetic media such as a magnetic tape, optical media such as CD-ROMs and DVDs, magneto-optical media such as floptical disks, and hardware devices specifically configured to store and execute program instructions, such as ROM, RAM, and flash memory. The program instructions include not only machine language codes compiled by a compiler, but also high-level language codes that can be executed by a computer using an interpreter, etc. A hardware device may be changed into one or more software modules to perform the processes according to the present disclosure, and vice versa.

Specific execution described herein is an embodiment and does not limit the present disclosure in any way. For briefness of the specification, electronic components, control systems, and software of the related art, and other functions of the system may not be described. Furthermore, wire connection and connecting members of components shown in the figures are examples of functional connection and/or physical or circuit connections, and in actual devices, they may be replaceable or may be shown as various additional functional connection, physical connection, or circuit connection. Unless stated in detail such as "necessary" and "important", they may not be necessary component for the present disclosure.

Although exemplary embodiments of the present disclosure were described above, it should be understood that the present disclosure may be changed and modified in various ways by those skilled in the art without departing from the spirit and scope of the present disclosure described in the following claims. Therefore, the technical scope of the present disclosure is not limited to the exemplary embodiments described herein, but should be determined by claims.

### [Industrial Applicability]

The present disclosure relates to a method and system for providing an intelligent response agent based on a sophisticated reasoning and inference function, and is applicable to the artificial intelligence industry, thus having industrial applicability.

## Claims

1. A method of providing an intelligent response agent based on a sophisticated reasoning and inference function is a method in which a response agent application 111 that is executed by at least one processor of a terminal provides an intelligent response agent based on a sophisticated reasoning and inference function, and the method comprising:
acquiring query data specifying a user's question;
determining a specialized document for the acquired query data;
detecting an evidential paragraph including at least one passage associated with the query data in the determined specialized document;
generating response data specifying an answer to the question on the basis of the detected evidential paragraph; and
providing the generated response data.

2. The method of claim 1, further comprising:
acquiring rationale data that is base data for generating the response data on the basis of the detected evidential paragraph; and
generating the response data on the basis of the acquired rationale data.

3. The method of claim 2, wherein the rationale data includes at least one data of main answer data including a direct answer to the query data, explanation sentence data including a detailed explanation for the direct answer, and auxiliary information data including background knowledge information related to the question and the answer.

4. The method of claim 1, wherein the detecting of an evidential paragraph includes detecting the evidential paragraph on the basis of a prompt engineering algorithm.

5. The method of claim 2, further comprising:
inputting the determined specialized document and the query data into a response agent model that executes a multi-step inference process; and
generating the response data on the basis of the response agent model,
wherein the multi-step inference process includes an associative selection process that detects the evidential paragraph, a rationale generation process that acquires the rationale data, and a systematic composition process that generates the response data.

6. The method of claim 5, wherein the generating of the response data on the basis of the response agent model includes executing the associative selection process and the rationale generation process by reflecting at least one previously stored query data and response data.

7. The method of claim 2, wherein the providing of the generated response data includes matching and providing rationale information for the response data with the response data, and
the rationale information includes at least two or more of the rationale data, the evidential paragraph data, the evidential paragraph identification information, the specialized document data, the specialized document identification information, and the query data.

8. The method of claim 7, wherein the providing of the generated response data further includes:
separating the response data into at least one sentence unit;
detecting the rationale information for each of the separated sentences; and
matching and providing the detected rationale information for each sentence with a sentence corresponding to each item of rational information.

9. The method of claim 1, wherein the determining of a specialized document for the query data includes at least one of:
determining a specialized document for the query data on the basis of at least one specialized document input by the user;
determining a specialized document for the query data on the basis of a specialized document corresponding to at least one item of specialized document identification information input by the user; and
detecting at least one specialized document having relevance at a preset level or higher to the query data on the basis of a predetermined deep-learning neural network, and determining a specialized document for the query data on the basis of the detected at least one specialized document.

10. A system for providing an intelligent response agent based on a sophisticated reasoning and inference function, the system comprising:
at least one memory 110 configured to store a response agent application 111; and
at least one processor providing an intelligent response agent based on a sophisticated reasoning and inference function by reading out the response agent application 111 stored in the memory 110,
wherein instructions of the response agent application 111 include instructions for performing:
acquiring query data specifying a user's question;
determining a specialized document for the acquired query data;
detecting an evidential paragraph including at least one passage associated with the query data in the determined specialized document;
generating response data specifying an answer to the question on the basis of the detected evidential paragraph; and
providing the generated response data.
